# EUROPEAN PATENT APPLICATION

(11) **EP 4 708 988 A1**
(43) Date of publication of application: **11.03.2026**
(21) Application number: 24797300.1
(22) Date of filing: 04.04.2024
(51) Int. Cl.: H04W 64/00, H04L 5/00, H04W 8/00, H04W 76/14, G01S 5/00, H04W 4/029, H04W 88/04, H04W 92/18, H04L 67/1042

(54) **POSITIONING METHOD BASED ON SERVER UE IN WIRELESS COMMUNICATION SYSTEM, AND DEVICE THEREFOR**

(30) Priority: 25.04.2023 KR 20230054160; 25.04.2023 KR 20230054279; 04.05.2023 KR 20230058569
(71) Applicant: LG Electronics Inc., Yeongdeungpo-gu Seoul 07336 (KR)
(72) Inventor: NAM, Jonggil, Seoul 06772 (KR); KO, Woosuk, Seoul 06772 (KR); SEO, Hanbyul, Seoul 06772 (KR); LEE, Seungmin, Seoul 06772 (KR)
(74) Representative: Mooser, Sebastian Thomas
(86) International application number: PCT/KR2024/004372
(87) International publication number: WO 2024/225642

(57) **Abstract**

The present disclosure relates to a method by which a target user equipment (UE) performs positioning in a wireless communication system. Specifically, the method comprises the steps of: establishing a first connection to a location server; establishing a second connection to at least one anchor UE; transmitting a location information request message to the at least one anchor UE on the second connection on the basis of having received the location information request message from the location server on the first connection; and transmitting, to the location server on the first connection, a first location information providing message and a second location information providing message that is related to the target UE, on the basis of having received the first location information providing message from the at least one anchor UE on the second connection.

## Description

### TECHNICAL FIELD

The present disclosure relates to a wireless communication system. More particularly, the present disclosure relates to a positioning method based on a server user equipment (UE) in a wireless communication system and an apparatus therefor.

### BACKGROUND

Wireless communication systems are being widely deployed to provide various types of communication services such as voice and data. In general, a wireless communication system is a multiple access system capable of supporting communication with multiple users by sharing available system resources (bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system, and a multi carrier frequency division multiple access (MC-FDMA) system.

Sidelink (SL) refers to a communication scheme in which a direct link is established between user equipments (UEs) and the UEs directly exchange voice or data without intervention of a base station (BS). SL is considered as a solution of relieving the BS of the constraint of rapidly growing data traffic.

Vehicle-to-everything (V2X) is a communication technology in which a vehicle exchanges information with another vehicle, a pedestrian, and infrastructure by wired/wireless communication. V2X may be categorized into four types: vehicle-to-vehicle (V2V), vehicle-to-infrastructure (V2I), vehicle-to-network (V2N), and vehicle-to-pedestrian (V2P). V2X communication may be provided via a PC5 interface and/or a Uu interface.

As more communication devices require a larger communication capacity, there is a need for improved mobile broadband communication, compared to existing radio access technology (RAT). Accordingly, communication systems that take into account services or UEs sensitive to reliability and latency are under discussion, and the next-generation wireless access technology that takes into account improved mobile broadband communication, massive machine type communication (MTC), and ultra-reliable and low latency communication (URLLC) may be referred to as new RAT or new radio (NR). V2X communication may also be supported in NR.

### DISCLOSURE

### Technical Problem

The present disclosure proposes a positioning method based on a server user equipment (UE) in a wireless communication system and an apparatus therefor.

The objects to be achieved with the present disclosure are not limited to what has been particularly described hereinabove and other objects not described herein will be more clearly understood by persons skilled in the art from the following detailed description.

### Technical Solution

According to an aspect of the present disclosure, a method performed by a target user equipment (UE) in a wireless communication system is provided. The method includes establishing a first connection with a location server, establishing a second connection with at least one anchor UE, based on receiving a location information request message from the location server on the first connection, transmitting the location information request message to the at least one anchor UE on the second connection, and based on receiving a first location information providing message from the at least one anchor UE on the second connection, transmitting the first location information providing message and a second location information providing message related to the target UE to the location server on the first connection.

According to another aspect of the present disclosure, a target UE in a wireless communication system is provided. The target UE includes at least one transceiver, at least one processor, and at least one computer memory operably connectable to the at least one processor and storing instructions that, when executed, cause the at least one processor to perform operations. The operations include establishing a first connection with a location server, establishing a second connection with at least one anchor UE, based on receiving a location information request message from the location server on the first connection, transmitting the location information request message to the at least one anchor UE on the second connection, and based on receiving a first location information providing message from the at least one anchor UE on the second connection, transmitting the first location information providing message and a second location information providing message related to the target UE to the location server on the first connection.

According to another aspect of the present disclosure, a processing device in a wireless communication system is provided. The processing device includes at least one processor, and at least one computer memory operably connected to the at least one processor and storing instructions that, when executed, cause the at least one processor to perform operations for a target user equipment (UE). The operations include establishing a first connection with a location server, establishing a second connection with at least one anchor UE, based on receiving a location information request message from the location server on the first connection, transmitting the location information request message to the at least one anchor UE on the second connection, and based on receiving a first location information providing message from the at least one anchor UE on the second connection, transmitting the first location information providing message and a second location information providing message related to the target UE to the location server on the first connection.

According to another aspect of the present disclosure, a computer-readable storage medium is provided. The computer-readable storage medium stores at least one program code including instructions that, when executed, cause at least one processor to perform operations for a target user equipment (UE). The operations include establishing a first connection with a location server, establishing a second connection with at least one anchor UE, based on receiving a location information request message from the location server on the first connection, transmitting the location information request message to the at least one anchor UE on the second connection, and based on receiving a first location information providing message from the at least one anchor UE on the second connection, transmitting the first location information providing message and a second location information providing message related to the target UE to the location server on the first connection.

The location server may include a location management function (LMF) or a server UE. In particular, the location server may perform location calculation of the target UE based on the second location information providing message.

Characteristically, the location server and at least one anchor UE may not establish a connection. For example, the location server and the at least one anchor UE may not establish a connection.

The establishing of the first connection may include establishing a first positioning protocol session with the location server, and the establishing of the second connection may include establishing a second positioning protocol session with the at least one anchor UE.

The foregoing solutions are merely a part of the examples of the present disclosure and various examples into which the technical features of the present disclosure are incorporated may be derived and understood by persons skilled in the art from the following detailed description.

### Advantageous Effects

According to the present disclosure, wireless signal transmission and reception may be efficiently performed in wireless communication systems.

It will be appreciated by persons skilled in the art that the effects that could be achieved with the present disclosure are not limited to what has been particularly described hereinabove and other advantages of the present disclosure will be more clearly understood from the following detailed description.

### BRIEF DESCRIPTION OF THE DRAWINGS

The accompanying drawings, which are included to provide a further understanding of the present disclosure, illustrate embodiments of the present disclosure and together with the description serve to explain the principle of the present disclosure:
FIG. 1 is a diagram illustrating the structure of a new radio (NR) system;
FIG. 2 is a diagram illustrating functional split between a next generation radio access network (NG-RAN) and a 5th generation core network (5GC);
FIG. 3 illustrates a radio protocol architecture of the NR system;
FIG. 4 illustrates a radio frame structure in NR system;
FIG. 5 illustrates a resource grid of a slot in the NR system;
FIG. 6 illustrates an example of a communication system 1 to which implementations of the present disclosure is applied;
FIG. 7 and FIG. 8 illustrate wireless devices applicable to the present disclosure;
FIG. 9 illustrates a vehicle or an autonomous driving vehicle applied to the present disclosure;
FIG. 10 illustrates a radio protocol architecture for sidelink (SL) communication;
FIG. 11 illustrates a synchronization source or synchronization reference of vehicle-to-everything (V2X);
FIG. 12 illustrates a procedure of performing V2X or SL communication by a user equipment (UE) depending on a transmission mode;
FIG. 13 illustrates three cast types in SL communication;
FIG. 14 illustrates an example of a sensing operation according to an embodiment of the present disclosure;
FIG. 15 illustrates an exemplary 5G system architecture capable of positioning for UEs connected to a next-generation radio access network (NG-RAN) or evolved universal terrestrial radio access network (E-UTRAN);
FIG. 16 illustrates an example of network implementation for measuring the location of a UE;
FIG. 17 illustrates exemplary protocol layers used to support Long-Term Evolution (LTE) positioning protocol (LPP) message transfer between a location management function (LMF) and a UE;
FIG. 18 illustrates exemplary protocol layers used to support NR positioning protocol annex (NRPPa) protocol data unit (PDU) transfer between an LMF and an NG-RAN node;
FIG. 19 is a diagram for explaining an Observed Time Difference of Arrival (OTDOA) positioning method according to an embodiment of the present disclosure;
FIG. 20 is a diagram for explaining a problem in server UE-based positioning;
FIG. 21 illustrates an example of selecting a server UE according to the present disclosure;
FIG. 22 illustrates an example of selecting a server UE according to the present disclosure;
FIG. 23 is a diagram for explaining a problem in server UE selection according to the related art;
FIGS. 24 and 25 are diagrams illustrating an anchor UE determination process according to the related art;
FIG. 26 is a diagram illustrating a server UE-based positioning procedure according to a first embodiment of the present disclosure;
FIG. 27 is a diagram illustrating a server UE-based positioning procedure according to a second embodiment of the present disclosure;
FIG. 28 is a flowchart for performing a server UE-based positioning procedure according to the second embodiment of the present disclosure; and
FIG. 29 is a diagram illustrating a server UE-based positioning procedure according to a third embodiment of the present disclosure.

### DETAILED DESCRIPTION

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA), or the like. IEEE 802.16m is an evolution of IEEE 802.16e, offering backward compatibility with an IRRR 802.16e-based system. UTRA is a part of universal mobile telecommunications system (UMTS). 3rd generation partnership project (3GPP) long term evolution (LTE) is a part of evolved UMTS (E-UMTS) using evolved UTRA (E-UTRA). 3GPP LTE employs OFDMA for downlink (DL) and SC-FDMA for uplink (UL). LTE-advanced (LTE-A) is an evolution of 3GPP LTE.

As more and more communication devices require greater communication capacity, there is a growing need for enhanced Mobile Broadband Communications (eMBB) improved over the current radio access technology (RAT). In addition, massive Machine Type Communications (MTC) that connects numerous devices and objects to provide various services anytime and anywhere is also considered a key issue in next-generation communications. Additionally, discussions are underway regarding communication system designs in consideration of services and/or UEs sensitive to reliability and latency. The introduction of next-generation RATs such as eMBB, massive MTC, Ultra Reliable and Low Latency Communications (URLLC) is being discussed. In this document, the corresponding technology will be referred to as New Radio or New RAT (NR) for convenience of description.

For the sake of clarity, the present disclosure primarily focuses on 3GPP NR, but the technical ideas of the present disclosure are not limited thereto.

In this specification, the term "set/setting" may be replaced with the term "configure/configuration", and both terms may be used interchangeably. A conditional expression (e.g., "if", "in a case", or "when") may be replaced by "based on that" or "in a state/status." In addition, operations and software/hardware (SW/HW) configurations of a user equipment/base station (UE/BS) may be derived/understood based on satisfaction of related conditions. If a process on a receiving (or transmitting) side is capable of being derived/understood from a process on a transmitting (or receiving) side in signal transmission/reception between wireless communication devices (e.g., BS, UE, etc.), description thereof may be omitted. Signal determination/generation/encoding/transmission at the transmitting side, for example, may be understood as signal monitoring reception/decoding/determination at the receiving side. When it is said that the UE performs (or does not perform) a specific operation, it may be interpreted to mean that the BS expects/assumes (or does not expect/assume) that the UE will perform the specific operation. When it is said that the BS performs (or does not perform) a specific operation, it may be interpreted to mean that the UE expects/assumes (or does not expect/assume) that the BS will perform the specific operation. In the following description, the classification and indexing of sections, embodiments, examples, options, methods, schemes, and so on are merely for convenience of description, but it does not imply that each necessarily constitutes an independent disclosure or should be implemented separately. Furthermore, in describing each section, embodiment, example, option, method, solution, and so on if there is no explicit conflict, it may be inferred or understood that at least some of the sections, embodiments, examples, options, methods, solutions, and so on may be implemented in combination or may be omitted in implementation.

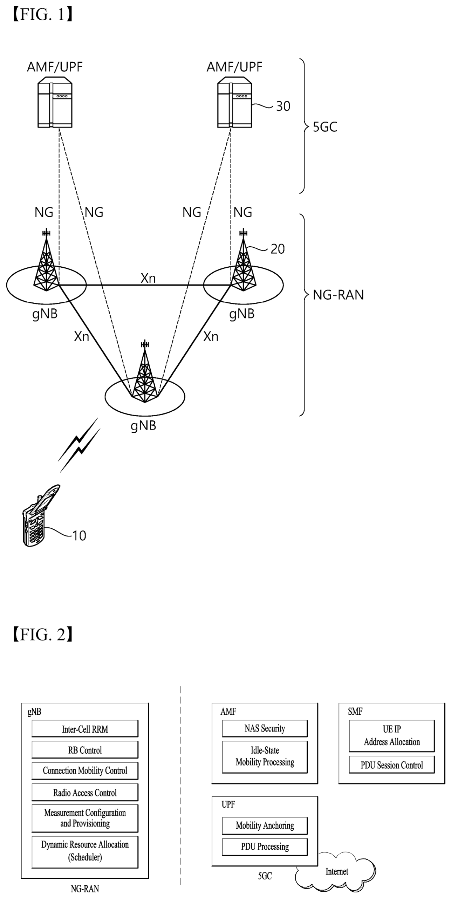

FIG. 1 illustrates the structure of a NR system.

Referring to FIG. 1, a next-generation radio access network (NG-RAN) may include a BS 20 that provides user plane and control plane protocol termination to a UE 10. For example, the BS 20 may include a next-generation Node B (gNB) and/or an evolved Node B (eNB). The UE 10 may have fixed or mobile characteristics. The UE 10 may be referred to by other terms such as a mobile station (MS), user terminal (UT), subscriber station (SS), mobile terminal (MT), or wireless device. For example, the BS 20 may be a fixed station communicating with the UE 10. The BS 10 may be referred to by other terms such as a base transceiver system (BTS), access point, and so on.

FIG. 1 shows an example in which a gNB alone is included. The BSs 20 may be connected to each other via an Xn interface. The BS 20 may be connected to a 5th generation core network (5GC) via an NG interface. Specifically, the BS 20 may be connected to an access and mobility management function (AMF) 30 through an NG-C interface and connected to a user plane function (UPF) 30 through an NG-U interface.

FIG. 2 illustrates functional split between the NG-RAN and the 5GC.

Referring to FIG. 2, a gNB may provide functions including inter-cell radio resource management (RRM), radio admission control, measurement configuration and providing, and dynamic resource allocation. The AMF may provide functions such as non-access stratum (NAS) security and idle-state mobility processing. The UPF may provide functions including mobility anchoring and protocol data unit (PDU) processing. A session management function (SMF) may provide functions including UE Internet protocol (IP) address allocation and PDU session control.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

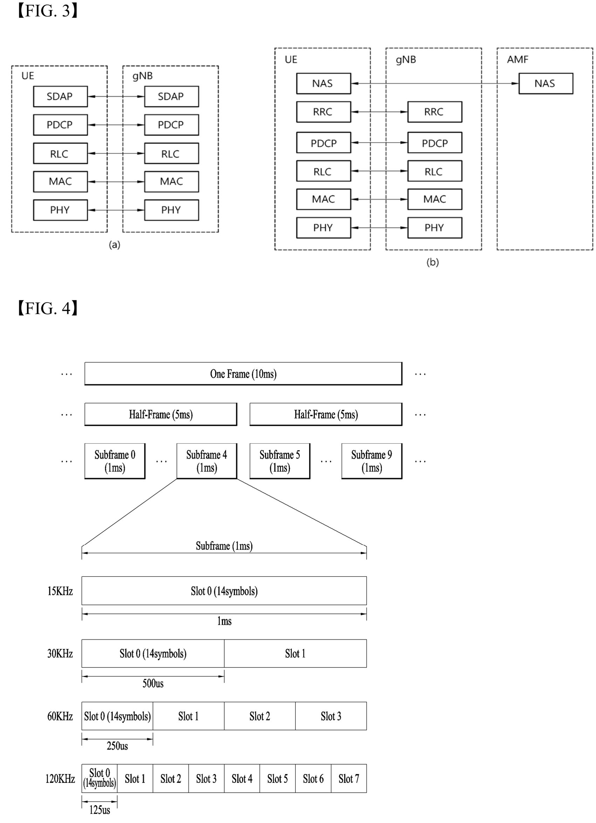

FIG. 3 illustrates a radio protocol architecture of the NR system. Specifically, FIG. 3(a) illustrates a user-plane radio protocol architecture, and FIG. 3(b) illustrates a control-plane radio protocol architecture. A user plane is a protocol stack for user data transmission, and a control plane is a protocol stack for control signal transmission.

Referring to FIG. 3, the PHY layer provides an information transfer service to its higher layer on physical channels. The PHY layer is connected to the medium access control (MAC) layer through transport channels and data is transferred between the MAC layer and the PHY layer on the transport channels. The transport channels are divided according to features with which data is transmitted via a radio interface.

Data is transmitted on physical channels between different PHY layers, that is, the PHY layers of a transmitter and a receiver. The physical channels may be modulated in orthogonal frequency division multiplexing (OFDM) and use time and frequencies as radio resources.

The MAC layer provides services to a higher layer, radio link control (RLC) on logical channels. The MAC layer provides a function of mapping from a plurality of logical channels to a plurality of transport channels. Further, the MAC layer provides a logical channel multiplexing function by mapping a plurality of logical channels to a single transport channel. A MAC sublayer provides a data transmission service on the logical channels.

The RLC layer performs concatenation, segmentation, and reassembly for RLC serving data units (SDUs). In order to guarantee various quality of service (QoS) requirements of each radio bearer (RB), the RLC layer provides three operation modes, transparent mode (TM), unacknowledged mode (UM), and acknowledged Mode (AM). An AM RLC provides error correction through automatic repeat request (ARQ).

The RRC layer is defined only in the control plane and controls logical channels, transport channels, and physical channels in relation to configuration, reconfiguration, and release of RBs. An RB refers to a logical path provided by L1 (the PHY layer) and L2 (the MAC layer, the RLC layer, and the packet data convergence protocol (PDCP) layer), for data transmission between the UE and the network.

The user-plane functions of the PDCP layer include user data transmission, header compression, and ciphering. The control-plane functions of the PDCP layer include control-plane data transmission and ciphering/integrity protection.

A service data adaptation protocol (SDAP) layer is only defined in the user plane. The SDAP layer performs functions such as mapping between QoS flows and data radio bearers as well as marking QoS flow identifiers (IDs) within DL and UL packets.

RB establishment amounts to a process of defining radio protocol layers and channel features and configuring specific parameters and operation methods in order to provide a specific service. RBs may be classified into two types, signaling radio bearer (SRB) and data radio bearer (DRB). The SRB is used as a path in which an RRC message is transmitted on the control plane, whereas the DRB is used as a path in which user data is transmitted on the user plane.

Once an RRC connection is established between the RRC layer of the UE and the RRC layer of the E-UTRAN, the UE is placed in RRC_CONNECTED state, and otherwise, the UE is placed in RRC_IDLE state. In NR, RRC_INACTIVE state is additionally defined. A UE in the RRC_INACTIVE state may maintain a connection to a core network, while releasing a connection from an eNB.

DL transport channels carrying data from the network to the UE include a broadcast channel (BCH) on which system information is transmitted and a DL shared channel (DL SCH) on which user traffic or a control message is transmitted. Traffic or a control message of a DL multicast or broadcast service may be transmitted on the DL-SCH or a DL multicast channel (DL MCH). UL transport channels carrying data from the UE to the network include a random access channel (RACH) on which an initial control message is transmitted and an UL shared channel (UL SCH) on which user traffic or a control message is transmitted.

The logical channels which are above and mapped to the transport channels include a broadcast control channel (BCCH), a paging control channel (PCCH), a common control channel (CCCH), a multicast control channel (MCCH), and a multicast traffic channel (MTCH).

A physical channel includes a plurality of OFDM symbol in the time domain by a plurality of subcarriers in the frequency domain. One subframe includes a plurality of OFDM symbols in the time domain. An RB is a resource allocation unit defined by a plurality of OFDM symbols by a plurality of subcarriers. Further, each subframe may use specific subcarriers of specific OFDM symbols (e.g., the first OFDM symbol) in a corresponding subframe for a physical DL control channel (PDCCH), that is, an L1/L2 control channel. A transmission time interval (TTI) is a unit time for subframe transmission.

FIG. 4 illustrates a radio frame structure in NR system.

Referring to FIG. 4, a radio frame may be used for UL transmission and DL transmission in NR. A radio frame is 10ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP). In a normal CP (NCP) case, each slot may include 14 symbols, whereas in an extended CP (ECP) case, each slot may include 12 symbols.

Table 1 below lists the number of symbols per slot (*N*^{slot}_{symb}), the number of slots per frame (*N*^{frame,u}ₛₗₒₜ), and the number of slots per subframe (*N*^{subframe,u}ₛₗₒₜ) according to an SCS configuration µ in the NCP case.

**[Table 1]**

| u | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 below lists the number of symbols per slot (*N*^{slot}_{symb}), the number of slots per frame (*N*^{frame,u}ₛₗₒₜ), and the number of slots per subframe (*N*^{subframe}ₛₗₒₜ)according to an SCS in the ECP case.

**[Table 2]**

| u | *N*^{slot}_{symb} | *N*^{frame,u}ₛₗₒₜ | *N*^{subframe,u}ₛₗₒₜ |
|---|---|---|---|
| 2 | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

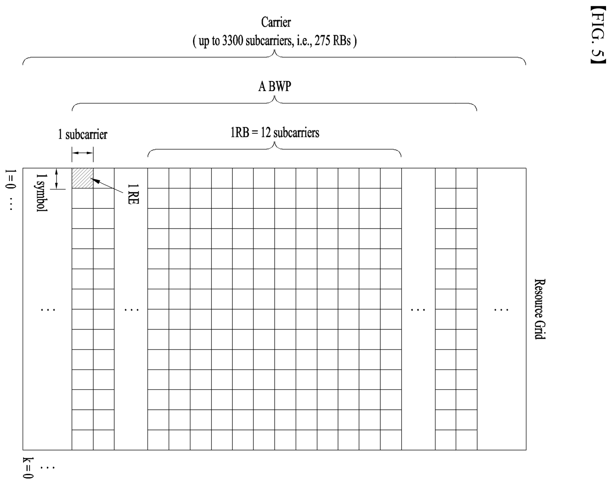

FIG. 5 illustrates a resource grid of a slot in the NR system.

Referring to FIG. 5, a slot includes a plurality of symbols in the time domain. For example, one slot may include 14 symbols in an NCP case and 12 symbols in an ECP case. Alternatively, one slot may include 7 symbols in an NCP case and 6 symbols in an ECP case. A carrier includes a plurality of subcarriers in the frequency domain. An RB may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, or the like). A carrier may include up to N (e.g., 5) BWPs. Data communication may be conducted in an activated BWP. Only one BWP can be activated for one UE. For each element may be referred to as a resource element (RE) in a resource grid, to which one complex symbol may be mapped.

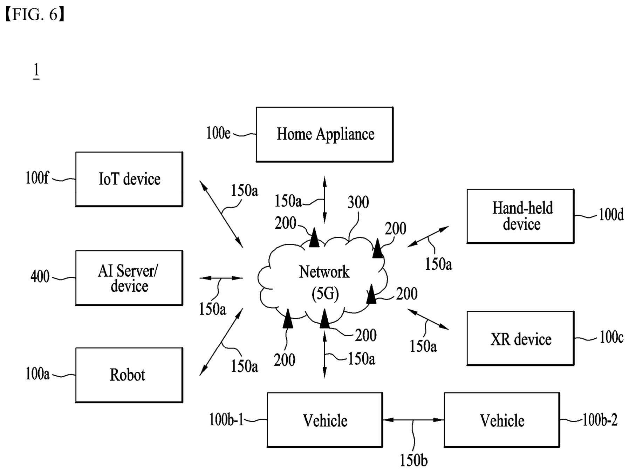

FIG. 6 illustrates an example of a communication system 1 to which implementations of the present disclosure is applied.

Referring to FIG, 6, the communication system 1 includes wireless devices, base stations (BSs), and a network. The wireless devices represent devices performing communication using radio access technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. The vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., V2V/V2X communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as UL/DL communication 150a, sidelink communication 150b (or, D2D communication), or inter BS communication (e.g., relay, integrated access backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

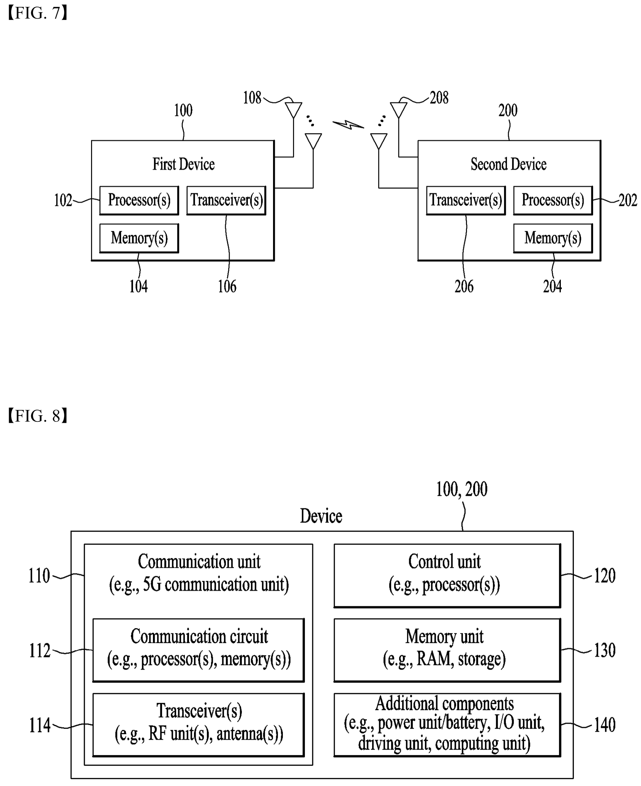

FIG. 7 illustrates wireless devices applicable to the present disclosure.

Referring to FIG. 7, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 6.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more service data unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 8 illustrates another example of a wireless device which can perform implementations of the present disclosure. The wireless device may be implemented in various forms according to a use-case/service (refer to FIG. 6).

Referring to FIG. 8, wireless devices 100 and 200 may correspond to the wireless devices 100 and 200 of FIG. 7 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 of FIG. 7 and/or the one or more memories 104 and 204 of FIG. 7. For example, the transceiver(s) 114 may include the one or more transceivers 106 and 206 of FIG. 2 and/or the one or more antennas 108 and 208 of FIG. 7. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit (e.g., audio I/O port, video I/O port), a driving unit, and a computing unit. The wireless device may be implemented in the form of, without being limited to, the robot (100a of FIG. 6), the vehicles (100b-1 and 100b-2 of FIG. 6), the XR device (100c of FIG. 6), the hand-held device (100d of FIG. 6), the home appliance (100e of FIG. 6), the IoT device (100f of FIG. 6), a digital broadcast terminal, a hologram device, a public safety device, an MTC device, a medicine device, a Fintech device (or a finance device), a security device, a climate/environment device, the AI server/device (400 of FIG. 6), the BSs (200 of FIG. 6), a network node, etc. The wireless device may be used in a mobile or fixed place according to a use-example/service.

In FIG. 8, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read only memory (ROM)), a flash memory, a volatile memory, a non-volatile memory, and/or a combination thereof.

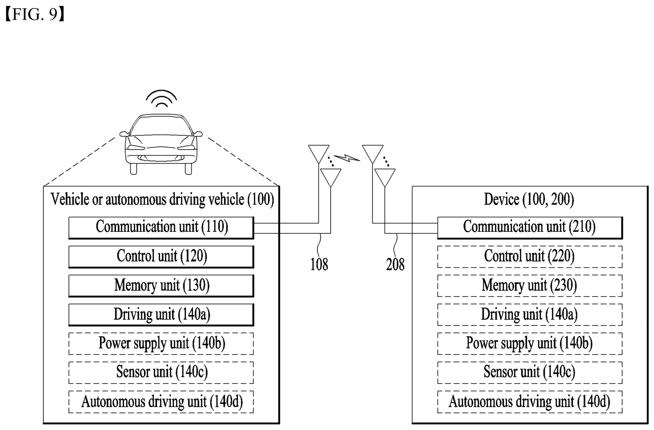

FIG. 9 illustrates a vehicle or an autonomous driving vehicle applied to the present disclosure. The vehicle or autonomous driving vehicle may be implemented by a mobile robot, a car, a train, a manned/unmanned aerial vehicle (AV), a ship, etc.

Referring to FIG. 9, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. Blocks 110/130/140a~140d correspond to Blocks 110/130/140 of FIG. 8, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles

Now, a description will be given of V2X or SL communication.

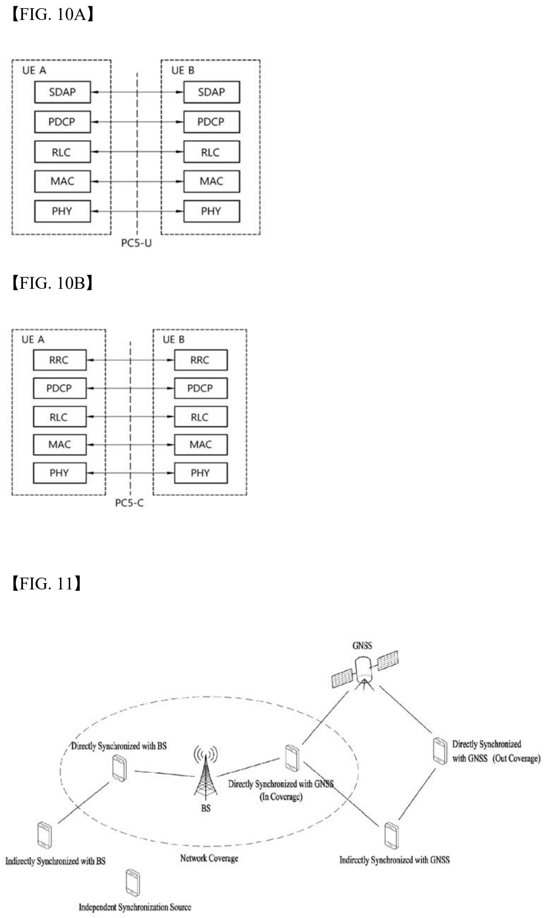

FIG. 10 illustrates a radio protocol architecture for SL communication. Specifically, FIG. 10(a) illustrates a user-plane protocol stack in NR, and FIG. 10(b) illustrates a control-plane protocol stack in NR.

Hereinafter, a sidelink synchronization signal (SLSS) and synchronization information will be described.

As an SL-specific sequence, the SLSS may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may use the S-PSS to detect an initial signal and obtain synchronization. In addition, the UE may use the S-PSS and the S-SSS to obtain detailed synchronization and detect a synchronization signal ID.

A physical sidelink broadcast channel (PSBCH) may be a (broadcast) channel for transmitting default (system) information that the UE needs to know first before SL signal transmission and reception. For example, the default information may include information related to an SLSS, a duplex mode (DM), a time division duplex (TDD) UL/DL configuration, information related to a resource pool, an application type related to the SLSS, a subframe offset, broadcast information, or the like. For example, for evaluation of PSBCH performance in NR V2X, the payload size of the PSBCH may be 56 bits including a CRC of 24 bits.

The S-PSS, S-SSS, and PSBCH may be included in a block format (e.g., SL synchronization signal (SS)/PSBCH block) supporting periodical transmission (hereinafter, the SL SS/PSBCH block is referred to as a sidelink synchronization signal block (S-SSB)). The S-SSB may have the same numerology (i.e., SCS and CP length) as that of a physical sidelink control channel (PSCCH)/physical sidelink shared channel (PSSCH) on a carrier, and the transmission bandwidth may exist within a configured (or preconfigured) SLBWP. For example, the S-SSB may have a bandwidth of 11 RBs. For example, the PSBCH may span 11 RBs. In addition, the frequency position of the S-SSB may be configured (in advance). Therefore, the UE does not need to perform hypothesis detection on frequency to discover the S-SSB in the carrier.

Hereinafter, synchronization acquisition of an SL UE will be described.

In TDMA and FDMA systems, accurate time and frequency synchronization are essential. If time and frequency synchronization are not accurate, system performance may be degraded due to inter-symbol interference (ISI) and inter-carrier interference (ICI) between symbols and subcarriers. The same is applied to V2X. In V2X, for time/frequency synchronization, an SLSS may be used at physical layers, while master information block-sidelink-V2X (MIB-SL-V2X) may be used at radio link control (RLC) layers.

FIG. 11 illustrates a synchronization source or synchronization reference of V2X.

Referring to FIG. 11, in V2X, a UE may be directly synchronized with global navigation satellite systems (GNSS). Alternatively, the UE may be indirectly synchronized with the GNSS through another UE (within or out of network coverage). If the GNSS is configured as a synchronization source, a UE may calculate a direct frame number (DFN) and a subframe number using coordinated universal time (UTC) and a (pre)configured DFN offset.

Alternatively, a UE may be directly synchronized with a BS or may be synchronized with another UE that is synchronized in time/frequency with the BS. For example, the BS may be an eNB or a gNB. For example, when a UE is in network coverage, the UE may receive synchronization information provided by the BS and may be directly synchronized with the BS. Next, the UE may provide the synchronization information to another adjacent UE. If a timing of the BS is configured as a synchronization reference, the UE may follow a cell associated with a corresponding frequency (when the UE is in cell coverage in frequency) or a primary cell or a serving cell (when the UE is out of cell coverage in frequency), for synchronization and DL measurement.

The BS (e.g., serving cell) may provide a synchronization configuration for a carrier used for V2X/SL communication. In this case, the UE may conform to the synchronization configuration received from the BS. If the UE fails to detect any cell in the carrier used for V2X/SL communication and fails to receive the synchronization configuration from the serving cell, the UE may conform to a preset synchronization configuration.

Alternatively, the UE may be synchronized with another UE that has failed to directly or indirectly acquire the synchronization information from the BS or the GNSS. A synchronization source and a preference may be preconfigured for the UE. Alternatively, the synchronization source and the preference may be configured through a control message provided by the BS.

Whether to use GNSS-based synchronization or BS-based synchronization may be configured (in advance). In single-carrier operation, the UE may derive the transmission timing of the UE from an available synchronization reference with the highest priority.

For example, the UE may select (or reselect) a synchronization reference and obtain synchronization from the synchronization reference. In addition, the UE may perform SL communication (e.g., PSCCH/PSSCH transmission and reception, physical sidelink feedback channel (PSFCH) transmission and reception, S-SSB transmission and reception, reference signal transmission and reception, etc.) based on the acquired synchronization.

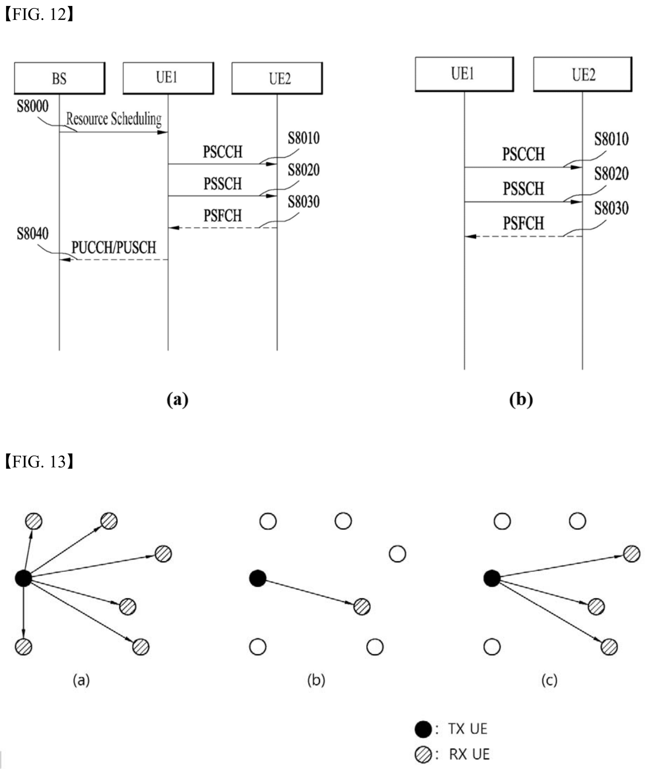

FIG. 12 illustrates a procedure of performing V2X or SL communication by a UE depending on a transmission mode. In various embodiments of the present disclosure, a transmission mode may be referred to as a mode or a resource allocation mode. For the convenience of the following description, a transmission mode in LTE may be referred to as an LTE transmission mode, and a transmission mode in NR may be referred to as an NR resource allocation mode.

For example, FIG. 12 (a) illustrates a UE operation related to LTE transmission mode 1 or LTE transmission mode 3. Alternatively, for example, FIG. 11 (a) illustrates a UE operation related to NR resource allocation mode 1. For example, LTE transmission mode 1 may apply to general SL communication, and LTE transmission mode 3 may apply to V2X communication.

For example, FIG. 12 (b) illustrates a UE operation related to LTE transmission mode 2 or LTE transmission mode 4. Alternatively, for example, FIG. 11 (b) illustrates a UE operation related to NR resource allocation mode 2.

Referring to FIG. 12(a), in LTE transmission mode 1, LTE transmission mode 3, or NR resource allocation mode 1, a BS may schedule an SL resource to be used for SL transmission by a UE. For example, in a step S8000, the BS may transmit information related to an SL resource and/or information related to a UE resource to a first UE. For example, the UL resource may include a PUCCH resource and/pr a PUSCH resource. For example, the UL resource may be a resource to report SL HARQ feedback to the BS.

For example, a first UE may receive information related to a Dynamic Grant (DG) resource and/or information related to a Configured Grant (CG) resource from a BS. For example, the CG resource may include a CG type 1 resource or a CG type 2 resource. In the present specification, the DG resource may be a resource that the BS configures/allocates to the first UE over Downlink Control Information (DCI). In the present specification, the CG resource may be a (periodic) resource configured/allocated by the BS to the first UE over a DCI and/or an RRC message. For example, in the case of the CG type 1 resource, the BS may transmit an RRC message including information related to the CG resource to the first UE. For example, in the case of the CG type 2 resource, the BS may transmit an RRC message including information related to the CG resource to the first UE, and the BS may transmit DCI related to activation or release of the CG resource to the first UE.

In a step S8010, the first UE may transmit PSCCH (e.g., Sidelink Control Information (SCI) or 1st-stage SCI) to a second UE based on the resource scheduling. In a step S8020, the first UE may transmit PSSCH (e.g., 2nd-stage SCI, MAC PDU, data, etc.) related to the PSCCH to the second UE. In a step S8030, the first UE may receive PSFCH related to the PSCCH/PSSCH from the second UE. For example, HARQ feedback information (e.g., negative acknowledgement (NACK) information or acknowledgement (ACK) information) may be received from the second UE over the PSFCH. In a step S8040, the first UE may transmit/report HARQ feedback information to the BS over PUCCH or PUSCH. For example, the HARQ feedback information reported to the BS may include information generated by the first UE based on HARQ feedback information received from the second UE. For example, the HARQ feedback information reported to the BS may include information generated by the first UE based on a preset rule. For example, the DCI may be a DCI for scheduling of SL. For example, the format of the DCI may include DCI format 3_0 or DCI format 3_1.

Referring to FIG. 12(b), in an LTE transmission mode 2, an LTE transmission mode 4, or an NR resource allocation mode 2, a UE may determine an SL transmission resource within an SL resource configured by a BS/network or a preconfigured SL resource. For example, the configured SL resource or the preconfigured SL resource may be a resource pool. For example, the UE may autonomously select or schedule resources for SL transmission. For example, the UE may perform SL communication by selecting a resource by itself within a configured resource pool. For example, the UE may perform sensing and resource (re)selection procedures to select a resource by itself within a selection window. For example, the sensing may be performed in unit of a sub-channel. For example, in the step S8010, the first UE having self-selected a resource in the resource pool may transmit PSCCH (e.g., Side Link Control Information (SCI) or 1st-stage SCI) to the second UE using the resource. In the step S8020, the first UE may transmit PSSCH (e.g., 2nd-stage SCI, MAC PDU, data, etc.) related to the PSCCH to the second UE. In the step S8030, the first UE may receive PSFCH related to the PSCCH/PSSCH from the second UE.

Referring to FIG. 12 (a) or FIG. 12 (b), for example, the first UE may transmit the SCI to the second UE on the PSCCH. Alternatively, for example, the first UE may transmit two consecutive SCIs (e.g., two-stage SCI) to the second UE on the PSCCH and/or PSSCH. In this case, the second UE may decode the two consecutive SCIs (e.g., two-stage SCI) to receive the PSSCH from the first UE. In the present specification, the SCI transmitted on the PSCCH may be referred to as a 1st SCI, a 1st-stage SCI, or a 1st-stage SCI format, and the SCI transmitted on the PSSCH may be referred to as a 2nd SCI, a 2nd SCI, a 2nd-stage SCI format. For example, the 1st-stage SCI format may include SCI format 1-A, and the 2nd-stage SCI format may include SCI format 2-A and/or SCI format 2-B.

Referring to FIG. 12(a) or FIG. 12(b), in step S8030, a first UE may receive a PSFCH. For example, the first UE and a second UE may determine a PSFCH resource, and the second UE may transmit HARQ feedback to the first UE on the PSFCH resource.

Referring to FIG. 12(a), in step S8040, the first UE may transmit SL HARQ feedback to the BS over a PUCCH and/or PUSCH.

FIG. 13 illustrates three cast types in SL communication.

Specifically, FIG. 13A shows broadcast-type SL communication, FIG. 13B shows unicast-type SL communication, and FIG. 13C shows groupcast-type SL communication. In the case of unicast-type SL communication, the UE may perform one-to-one communication with other UEs. In the case of groupcast-type SL communication, the UE may perform SL communication with one or more UEs within a group to which the UE belongs. In various embodiments of the present disclosure, SL groupcast communication may be replaced with SL multicast communication, SL one-to-many communication, etc.

### < Integrated Sensing and Communication (ISAC)>

Wireless sensing is a technology that may obtain information about the characteristics of an environment and/or an object within the environment by determining the instantaneous linear velocity, angle, distance (range), and so on of the object by using radio frequencies. A radio frequency sensing function may provide services for locating an object without a device because there is no need to connect to the object via a device in a network.

The function of obtaining range, velocity, and angle information from a radio frequency signal may provide a wide range of new functions such as detection of various objects, object recognition (e.g., vehicles, humans, animals, and UAVs), and high-precision localization, tracking, and activity recognition. A wireless sensing service may, for example, provide information to various industries (e.g., UAVs, smart homes, V2X, factories, railroads, public safety, and so on) that enable applications that provide intruder detection, assisted car driving and navigation, trajectory tracking, collision avoidance, traffic management, health and traffic management, and so on. In some cases, for wireless sensing, non-3GPP type sensors (e.g., radar and camera) may be used to further support 3GPP-based sensing. For example, an operation of the wireless sensing service, that is, a sensing operation, may depend on transmission, reflection, and scattering processing of a wireless sensing signal. Therefore, wireless sensing may provide an opportunity to enhance existing communication systems from communication networks to wireless communication and sensing networks.

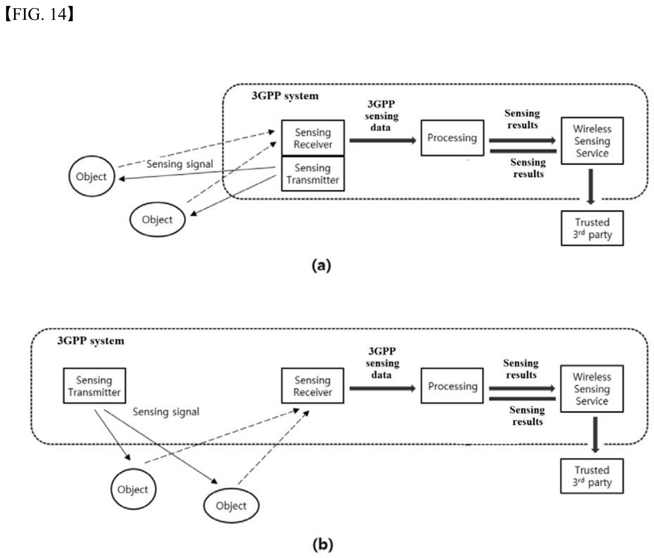

FIG. 14 illustrates an example of a sensing operation according to an embodiment of the present disclosure. The embodiment of FIG. 14may be combined with various embodiments of the present disclosure. Specifically, FIG. 14(a) illustrates an example of sensing (e.g., monostatic sensing) using a sensing receiver and a sensing transmitter at the same location, and FIG. 14(b) illustrates an example of sensing (e.g., bistatic sensing) using a sensing receiver and a sensing transmitter which are separated.

### <Positioning>

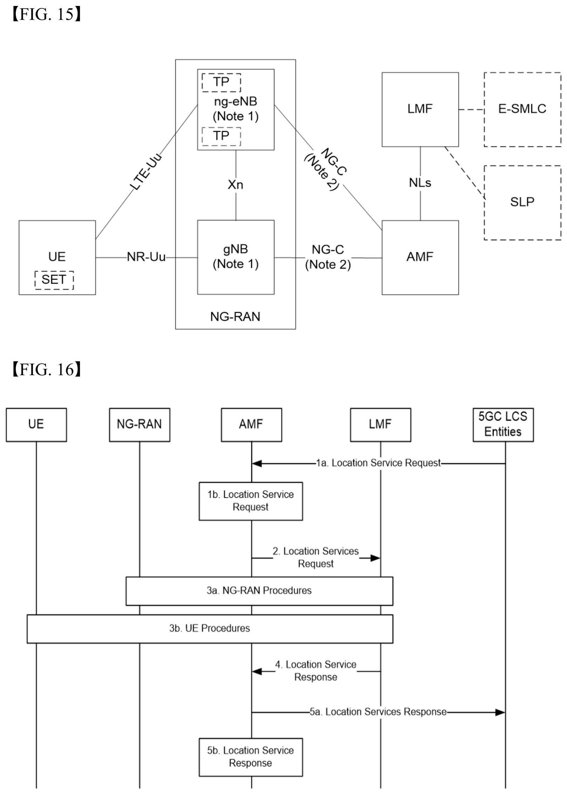

FIG. 15 illustrates an exemplary 5G system architecture capable of positioning for UEs connected to a NG-RAN or E-UTRAN.

Referring to FIG. 15, an AMF may receive a request for location services related to a specific target UE from other entities such as a gateway mobile location center (GMLC). Alternatively, the AMF may autonomously determine to initiate location services on behalf of the specific target UE. Thereafter, the AMF may transmit a location service request to a location management function (LMF). Upon receiving the location service request, the LMF may process the location service request and return processing results including the estimated location of the UE to the AMF. When the LMF receives a location service request from another entity other than the AMF, for example, the GMLC, the AMF may forward the processing results received from the LMF to the other entity.

A new-generation evolved Node B (ng-eNB) and gNB are network elements of the NG-RAN capable of providing measurement results for location estimation. The ng-eNB and gNB may measure radio signals for a target UE and transmit the results to the LMF. Additionally, the ng-eNB may control certain transmission points (TPs) such as remote radio heads, or positioning reference signal dedicated (PRS-dedicated) TPs for E-UTRA that support beacon systems based on a PRS.

The LMF is connected to an enhanced serving mobile location center (E-SMLC) which may enable the LMF to access the E-UTRAN. For example, the E-SMLC may enable the LMF to support Observed Time Difference of Arrival (OTDOA), which is one of positioning methods of the E-UTRAN, using DL measurement obtained by a target UE through signals transmitted by eNBs and/or PRS-only TPs in the E-UTRAN.

The LMF may be connected to an SUPL location platform (SLP). The LMF may support and manage different location services for target UEs. The LMF may interact with a serving ng-eNB or a serving gNB for a target UE in order to obtain position measurement for the UE. For positioning of the target UE, the LMF may determine positioning methods, based on a location service (LCS) client type, required quality of service (QoS), UE positioning capabilities, gNB positioning capabilities, and ng-eNB positioning capabilities, and then apply these positioning methods to the serving gNB and/or serving ng-eNB. The LMF may determine additional information such as accuracy of the location estimate and velocity of the target UE. The SLP is a secure user plane location (SUPL) entity responsible for positioning over a user plane.

The UE may measure DL signals through various sources, such as the NG-RAN and E-UTRAN, different global navigation satellite systems (GNSSs), a terrestrial beacon system (TBS), WLAN wireless local access network (WLAN) access points, Bluetooth beacons, and UE barometric pressure sensors. The UE may include an LCS application, or the UE may connect to the LCS application either through communication with a connected network or through other applications integrated into the UE. The LCS application may include measurement and calculation functions necessary for determining the location of the UE. For instance, the UE may include an independent positioning function such as a global positioning system (GPS), and thus the UE may report the location thereof independently of NG-RAN transmission. The independently acquired location information may also be used as supplemental information to positioning information obtained from the network.

FIG. 16 illustrates an example of network implementation for measuring the location of a UE.

When the UE is in a connection management-idle (CM-IDLE) state, if an AMF receives a location service request, the AMF may establish a signaling connection with the UE and request a network trigger service to assign a specific serving gNB or ng-eNB. The above operation process is not illustrated in FIG. 15. That is, in FIG. 16, it may be assumed that the UE is in the connected mode. However, the signaling connection may be released by a NG-RAN while the positioning process is in progress due to signaling and data inactivity.

Referring to FIG. 16, a network operation process for measuring the location of the UE will be described in detail. In step 1a, a SGC entity such as a GMLC may send a location service request to a serving AMF to measure the location of a target UE. However, even if the GMLC request no location services, the serving AMF may determine that location services are needed to measure the location of the target UE in step 1b. For example, the serving AMF may autonomously determine to provide location services to measure the location of the UE for an emergency call.

Thereafter, the AMF forwards the location service request to an LMF in step 2. In step 3a, the LMF may initiate location procedures with a serving ng-eNB and serving gNB to obtain positioning data or positioning assistance data. Additionally, in step 3b, the LMF may initiate location procedures for DL positioning with the UE. For example, the LMF may transmit location assistance data (e.g., assistance data defined in 3GPP TS 36.355) to the UE or obtain a location estimate or location measurement. Step 3b may be performed additionally after step 3a, or step 3b may be performed instead of step 3a.

In step 4, the LMF may provide a location service response to the AMF. The location service response may include information on whether the location of the UE is successfully estimated and the estimated location of the UE. Thereafter, if the procedures of FIG. 16 are initiated by step 1a, the AMF may forward the location services response to the SGC entity such as the GMLC. If the procedures of FIG. 16 are initiated by step 1b, the AMF may use the location service response to provide location services related to emergency calls, etc.

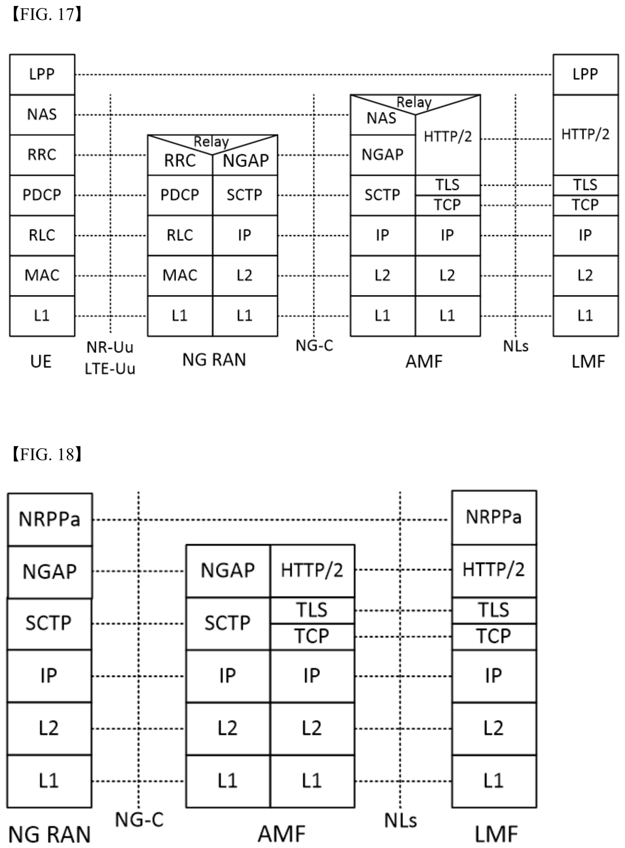

FIG. 17 illustrates exemplary protocol layers used to support LTE positioning protocol (LPP) message transfer between an LMF and a UE.

An LPP PDU may be transmitted in a NAS PDU between an AMF and a UE. Referring to FIG. 16, the LPP may be terminated between a target device (e.g., a UE in the control plane or an SUPL enabled terminal (SET) in the user plane) and a location server (e.g., an LMF in the control plane or an SUPL location platform (SLP) in the user plane). LPP messages may be delivered in a transparent PDU format through intermediate network interfaces using appropriate protocols such as a next-generation application protocol (NGAP) over the next-generation control plane (NG-C) interface, NAS/RRC over the LTE-Uu and NR-Uu interfaces. The LPP enables positioning for both NR and LTE by employing various positioning methods.

For example, a target device and a location server may exchange, through LPP, capability information therebetween, assistance data for positioning, and/or location information. The target device and the location server may exchange error information and/or indicate abort of an LPP procedure, through an LPP message.

FIG. 18 illustrates exemplary protocol layers used to support NR positioning protocol annex (NRPPa) PDU transfer between an LMF and an NG-RAN node.

NRPPa may be used for information exchange between an NG-RAN node and an LMF. Specifically, NRPPa may exchange an enhanced cell ID (E-CID) for measurements transmitted from an ng-eNB to an LMF, data to support OTDOA positioning methods, and a cell ID and cell location ID for NR Cell ID positioning methods. Even if there is no information about related NRPPa transactions, an AMF may route NRPPa PDUs based on the routing ID of an involved LMF over an NG-C interface.

NRPPa procedures for location and data collection may be categorized into two types. The first type is a UE-associated procedure, which involves transmission of information (e.g., location measurement data) on a specific UE. The second type is a non-UE associated procedure, which involves transmission of information applicable to NG-RAN nodes and related TPs (e.g., gNB/ng-eNB/TP timing information). These two types of procedures may be supported independently or simultaneously.

### <Positioning Methods>

The NG-RAN may support the following positioning methods: GNSS, OTDOA, E-CID, barometric sensor positioning, WLAN positioning, Bluetooth positioning, TBS, Uplink Time Difference of Arrival (UTDOA), and so on. Although any one of the positioning methods may be used for UE positioning, two or more positioning methods may be used for UE positioning.

### (1) Observed Time Difference of Arrival (OTDOA)

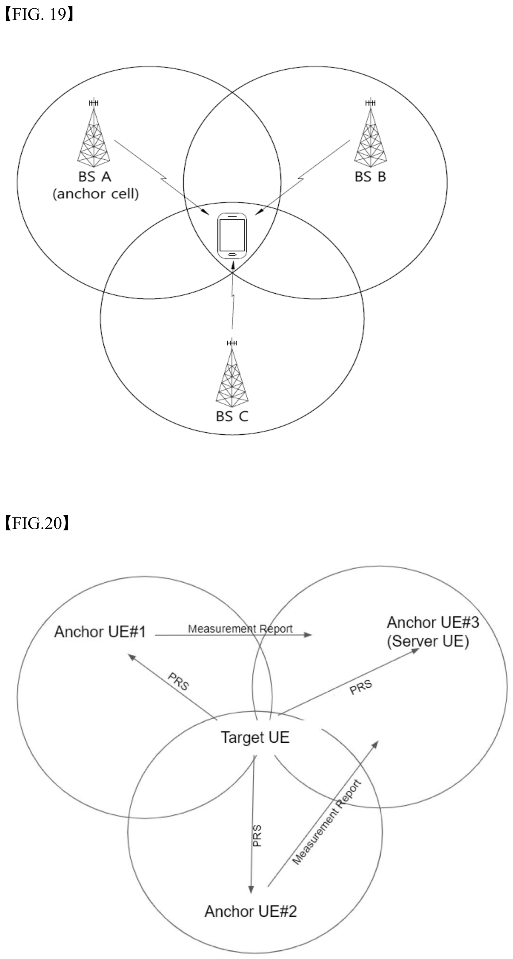

FIG. 19 is a diagram for explaining an OTDOA positioning method according to an embodiment of the present disclosure.

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

### (2) E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

### (3) Uplink Time Difference of Arrival (UTDOA)

UTDOA is a method of determining the location of the UE by estimating the arrival time of a sounding reference signal (SRS). When calculating the estimated SRS arrival time, the serving cell may be used as a reference cell to estimate the location of the UE based on the difference in time of arrival with respect to another cell (or BS/TP). To implement UTDOA, an E-SMLC may indicate the serving cell of a target UE and then instruct the target UE to perform SRS transmission. Additionally, the E-SMLC may provide the following configurations: periodic/non-periodic SRS, bandwidth, and frequency/group/sequence hopping.

### <SL Positioning>

NR positioning discussed in 3GPP NR Release 17 supports only network-based Uu positioning and does not support positioning using SL communication. However, SL positioning is planned to be supported in 3GPP NR Release 18.

Uu positioning is a conventional method for location estimation under a connection between a target UE and a BS (gNB/LMF), but SL positioning is a new method for location estimation based on a connection between a target UE and one or more anchor UEs.

Sidelink positioning is a new method for positioning performed by exchanging sidelink positioning reference signals (SL-PRS) with anchor UEs around a target UE, rather than with a base station (gNB), by a direction connection using sidelink communication technology. Accordingly, the sidelink positioning operation at the physical layer is performed through SL-PRS transmission and measurement between the target UE and the anchor UEs.

Conventionally, Uu positioning uses the LPP as a protocol. An LPP session is a point-to-point communication protocol between the target UE and the LMF. Thus, the LMF provides the target UE with positioning-related information using the LPP protocol. Additionally, the LMF performs positioning by configuring a gNB and exchanging positioning-related messages using the NRPPa protocol.

In contrast, in sidelink positioning, the positioning operation is performed by exchanging positioning protocol messages between the target UE and nearby anchor UEs, instead of the LMF. Therefore, the sidelink positioning at the protocol layer is performed between UEs using the sidelink positioning protocol (SLPP).

The SLPP procedure is based on a positioning protocol session (i.e., SLPP session) established between the target UE and anchor UE(s). The SLPP procedure (/transaction) basically includes the following five operations:
- SL Positioning Capability Transfer
- SL Positioning Assistance Data exchange
- SL Location Information Transfer
- Error handling
- Abort.

Additionally, in 3GPP, a positioning session-less positioning operation is also considered when message exchange is not required etween UEs.

To determine anchor UEs in SL positioning, the following processes are currently being discussed.
1) Through a discovery search process, a target UE exchanges UE capability information with surrounding UEs capable of SL communication (hereinafter referred to as candidate UEs) through SL communication. In this case, basic information such as whether the discovered UEs support SL positioning is exchanged. The anchor UE is determined only when the corresponding UEs support SL positioning.
2) After exchanging the basic information, the target UE and candidate UEs determine the final anchor UE through negotiation. When performing the negotiation for SL positioning, the anchor UE may be determined only when a request to serve as the anchor UE is not rejected during the negotiation process.
3) Additionally, the anchor UE provides information to the target UE regarding whether the anchor UE is capable of ascertaining the location thereof. The anchor UE may perform absolute positioning only when the anchor UE already knows the location thereof or when the anchor UE is capable of measuring the location thereof based on Uu positioning.

### <Sensor-based positioning>

Currently, a long-term evolution (LTE) positioning protocol (LPP) supports a sensor-based positioning method as one of positioning schemes.

First, a UE may determine its location by using global navigation satellite systems (GNSS) systems such as GPS, GLONASS, and Galileo. It is possible to determine the location of the UE in a stand-alone mode operation in an outdoor environment by using the GNSS method. Although it is difficult to call the UE a sensor, it is similar to a sensor in that the UE is capable of determining its location in a stand-alone mode without UE-based location calculation/network-based location calculation.

Next, vertical positioning using the UE's barometric pressure information is introduced, and a method of identifying the UE's movement by using the UE's built-in sensor, i.e., an inertial measurement unit (IMU), is introduced. That is, the movement of the UE may be identified by using a time difference (delta time) of the UE and the corresponding movement distance/direction information. In particular, in the case of an OTDOA method, a technology has been introduced to reduce positioning errors due to UE movement by providing movement information (the displacement) together with the timestamp for each TOA measurement.

Separately, the UE may provide its own measured velocity information (velocityEstimate) in the CommonIEsProvideLocationInformation message.

In a positioning operation using sensor information, an LMF (or location server) requests sensor information from the UE, and the UE transmits UE sensor information to the LMF according to the corresponding request. Through this, the LMF may obtain barometric pressure measurements and movement information of the UE.

Hereinafter, an LPP operation procedure related to sensor information is described.
- The LMF (or location server) requests sensor information transmission to the UE through Sensor-RequestLocationInformation IE in RequestLocationInformation message. In that message, barometric pressure information (uncompensatedBarometricPressureReq) and motion information (sensor-MotionInformationReq) may be requested. The LMF may also request adjustment information (adjustmentReq) from the UE.
- The UE transmits UE sensor information to the LMF (or location server) through the Sensor-ProvideLocationInformation IE in the ProvideLocationInformation message. The message may contain sensor information (Sensor-MeasurementInformation) and motion information (Sensor-MotionInformation).

Sensor-MeasurementInformation may include barometric pressure information (uncompensatedBarometricPressure) and uncertainty and adjustment information. Motion information (Sensor-MotionInformation) includes time difference (deltaTimeSec, deltaTimeSFN) information corresponding to displacement information (Displacement Information), distance, and direction information (horizontalDistance, horizontalDistance, verticalDirection).

The LMF may also request movement information when requesting OTDOA positioning information. The motion information refers to time difference information (deltaSFN) and time information source (motionTimeSource).
- The UE includes the corresponding information (i.e., deltaSFN and motionTimeSource) in the OTDOA-SignalMeasurementInformation message. In this case, the UE needs to provide detailed information to the LMF through the Sensor-MotionInformation of the Sensor-ProvideLocationInformation message.

Separately from the above procedure, the UE may provide its own measured velocity information (velocityEstimate) in the CommonIEsProvideLocationInformation message.

For reference, sensor information may also be transmitted to a base station (gNB) via an RRC measurement report message.

As described above, according to the related art, the LMF may request sensor information of the UE through the Sensor-RequestLocationInformation message. Here, the information corresponds to the UE's barometric pressure measurements and movement/displacement information. Here, the sensor information request may be made separately/independently from other positioning schemes.

In the OTDOA scheme, the LMF may request movement information together to identify UE movement information. Here, the UE may provide the requested information, and even if there is no request, the UE may deliver the information to the LMF in an unsolicited manner through the LPP Location Information Delivery procedure.

As such, by requesting sensor information together with a positioning scheme request, the LMF may determine the location information of the UE by referring to the sensor information along with the measurement result (or location determination result) of the positioning reference signal of the UE.

For example, the UE may share the independently measured sensor data with the 3GPP location server to utilize the data in an enhanced driver assistance system utilizing sensor data in 5G (especially, V2X or the like).

The current sensor information only includes barometric pressure information and movement information (time delta/direction/distance). However, more diverse sensor information may help determine or correct UE positioning. For example, magnetometers and gyroscope/compass information may determine the orientation of a device or vehicle. This may be useful for understanding more detailed movements of the UE, and may be applied to understanding the user's gaze direction in VR/AR devices used in extensible reality (XR). Visual information around the UE may be obtained using camera and laser light (Lidar) information. Radar and ultrasonic information may be used to determine a distance to specific objects. Accelerometer information may be used as a sensor to measure speed. Some of the examples above are already commercially implemented technologies and are being used as devices to measure positioning movements, or the like.

However, this is only applicable to the implementation of the UE, and is not currently supported by 3GPP as a standard except for current pressure and movement information, and thus there are also limitations in sharing sensor information between the UE and the location server (LMF), and between heterogeneous UEs/vehicles.

There are various advantages and disadvantages between a positioning scheme using communication technology and a positioning scheme using sensor technology. Sensor-based positioning uses the UE's own sensors, and thus may be used even in an environment in which satellites or communication infrastructure are unavailable. Sensor-based positioning may also be used to improve the performance of communication-based positioning based on sensor information.

Therefore, to improve positioning through positioning operations based on various sensors and sharing of sensor information, a standard method for messages and processing procedures that may contain more diverse sensor information is required. The sensor information may continue to become more diverse in type and number in the future. The current method of transmitting each sensor information separately is inefficient in terms of signaling overhead and latency. Therefore, an efficient method is needed that takes into account the utilization of sensor information that may become more diverse in the future.

The sensor-based positioning according to the present disclosure proposes a method and procedure of configuring a sensor information message for sensor-based positioning and sensor information sharing.

The UE identifies UE status information and surrounding environment information based on information obtained from the sensor. The information to be identified is as follows.

### - Height information

Here, the UE height information may have an absolute height or a relative value with respect to a target value. Resolution for height may be in meters or centimeters. The UE's height may be determined using barometric pressure information.

### - Direction/orientation

Here, UE direction information may be divided into absolute direction or relative value with respect to a destination.

The absolute direction may be expressed in at least one of the following methods.
1) It may be expressed in four directions (east, west, south, and north) or eight directions (i.e. east, west, south, north, southeast, southwest, northeast, and northwest).
2) It may be expressed in 12 clockwise directions.
3) It may be expressed from 0 degrees to 360 degrees (based on the north).

The relative direction may be expressed as the same direction as, or opposite to, a specific object or a specific destination.

Here, the direction of the UE may be determined using information from magnetometers, gyroscopes, compasses, or the like.

### - Speed/velocity information

The speed information may be calculated using travel time and travel distance. The speed information may be calculated using the direction information and speed information above. The speed/velocity of the UE may be determined using accelerometer sensor information.

### - Environment information

The environment information may include environment information such as dense urban, urban, sub-urban, and rural, and may include environment information such as indoor and outdoor, and information such as temperature and humidity. The environment information may include information such as smoke, gas, and water, as well as information obtained from a location-based service (LBS) system.

The environment information may include screen information obtained from a camera sensor. Visual information around the UE may be obtained using camera and laser light (Lidar) information.

Information about the surrounding environment may be obtained by using sensor information such as temperature sensor, humidity sensor, and oxygen sensor.

### - Discovery information

Information about a specific object for detection needs to be transmitted in a manner to be identified by the UE. For example, when a specific object is a UE, an L2ID used in sidelink communication may be used. In this case, the detected results seen from the side link SCI may be used. In detail, when a specific object is a BS, a BS ID may be used, and in particular, a cell ID received from the BS may be utilized.

Discovery may detect non-specific obstacles or hazards rather than specific objects. For example, discovery may be used to detect buildings or vehicles.

The discovery information may include information such as distance and direction to a specific/unspecified object, and information on previous LOS or NLOS recognition with a specific/unspecified object. In particular, a distance to specific/unspecified objects may be determined using information from radar, ultrasonic, and proximity sensors.

### - Access information

Information from facial recognition (Face ID) and fingerprint recognition sensors installed in a mobile UE may be used in a limited manner for purposes such as investigation of lost terminals or crimes. These parts are also applied to vehicles, and thus may be used for similar purposes as the mobile UE.

The various information proposed above have a unified format and common attributes regardless of the sensor type/source.

The UE's capability to provide each piece of information may be notified through UE capabilities, and in case of failure to obtain information, the cause of failure may be included in a (sensing error) message.

The information obtained as such is made into a single sensor message and may be transmitted as a positioning protocol message (i.e., LPP or SLPP), RRC message, and PCS message. Therefore, the corresponding message may be shared/forwarded between the UE and the LMF (i.e., LPP protocol), between the UE and the base BS (gNB) (i.e., RRC protocol), or between UEs (i.e., SLPP protocol).

For reference, UEs using other sensors require pre-processing to fit the defined unified form and properties.

There are the following methods for transmitting a sensor message.
a) The message may be delivered in response to a request (request-response/provide). The request may be made for each piece of information within a scope of UE support. Alternatively, if requested, regardless of whether support is available, the UE may provide only the information the UE is capable of obtaining.
b) Delivery is possible unsolicited, if necessary, regardless of the request. For example, it may be reported based on a time setting with a cycle (periodic reporting), or when the value is above or below a certain threshold. Here, the threshold may be used as an alarm.
c) The sensor message may be transmitted independently. The message may be transmitted together with/included with RRC measurement report and LPP/SLPP ProvideLocationInformation information for other purposes.
   - In an emergency, the UE may share all sensor information to determine its location.
   - The methods listed above may be used in combination with each other.

Each piece of information in a sensor message may include source information of the sensor.
- For example, the information may include information from various sensor sources such as barometers, magnetometers, gyroscopes, compasses, cameras, lidar, radar, ultrasonic, proximity sensors, accelerometers, temperature, humidity, oxygen sensors, face ID, and fingerprint sensors. Most of the sensors listed above are already installed in mobile UEs or vehicles. Therefore, sensor information may be utilized without adding any special hardware.
- There are also sensors installed for driving assistance devices in other vehicles. For example, Lane Departure Warning Sensor, Forward Collision Warning Sensor, or Adaptive Cruise Control Sensor. These parts are also available for additional use.
- Sensors using the mmWave frequency band used in 5G and the terahertz waves discussed in 6G are possible.
- In addition to the sensors listed above, other additional sensors may be added.
- Here, when one sensor information uses multiple sensor sources, only the most accurate information may be shared/transmitted. Alternatively, multiple sensor information may be shared/transmitted by categorizing them by sensor source.

Each piece of information in a sensor message may include information that may determine whether the sensing result is valid. The valid information means that the time obtained by the sensor is within a valid range. A valid range of time values is a configurable value. A preset/defined value may be used. Here, information related to accuracy may be included to determine whether the information is valid. For example, the information refers to information such as accuracy, uncertainty, and integrity.

In the present disclosure, standardization of sensor information into a form with a unified structure and common properties that are helpful for positioning judgment, regardless of the sensor type is proposed. This enables information exchange between non-standardized sensors. It allows sharing/transfer between diverse/heterogeneous entities through a standardized method.

This may effectively cover sensors that may be added in the future by simply adding sensor sources. Through the present disclosure, sensor information messages containing various sensor information enable sensor-based positioning operations. This utilizes the UE's own sensors, and thus it may be used even in situations in which positioning operations using conventional GNSS, LTE/5G infrastructure, and the like are difficult/impossible.

For example, it may be used to determine relative position or for ranging by synthesizing direction/speed information and detection information. This may also be applied to platooning and group positioning. Fine orientation sensor information may be utilized in XR, and the like. The sensor information may help improve conventional positioning performance and perform tasks such as positioning prediction. It may be used as a reference to determine which positioning mode to use based on surrounding information before positioning operation. It may cover areas that are difficult to distinguish using positioning methods using communication methods.

Various surrounding information may be utilized for climate change and public safety information along with location information. Information from sensors such as Face ID and fingerprint recognition may be used in a limited manner for purposes such as detecting lost devices or conducting criminal investigations.

### <Method of selecting server UE>

In conventional network-based positioning, a location server is the LMF. Sidelink positioning, similar to conventional network-based positioning, may also act as a location server when the LMF is to be included in the sidelink positioning operation (i.e., easily in coverage). However, in cases in which the LMF is difficult to include (i.e., Out Of Coverage (OCC) cases), an entity that may act as a location server is required.

The location server UE that takes charge on behalf of the LMF is defined as SL positioning server UE (abbreviated as server UE). A function of the server UE may be assumed by a target UE or an anchor UE that may assume the function.

FIG. 20 is a diagram for explaining a problem in server UE-based positioning.

Referring to FIG. 20, the server UE is responsible for selecting a positioning scheme, allocating assistant data, and calculating a location. For example, it is assumed that the server UE is responsible for calculating the location. When using the UL type SL-TDOA method, a target UE transmits SL-PRS, and an anchor UE measures SL-PRS. The information measured by the anchor UE needs to be transmitted to the server UE as a measurement report for position calculation. Here, SL-PRS transmission and measurement are performed through a connection between the target UE and each anchor UE. That is, no connection is required between anchor UEs.

However, when the server UE is an anchor UE and not a target UE, the server UE needs to be able to connect/communicate with all anchor UEs in PCS. Otherwise, the server UE may not receive all measurement reports from the anchor UEs, which may ultimately result in failure to obtain the location of the target UE or performance degradation.

In a normal case, when selecting an anchor UE, the target UE may be considered to be in a situation in which PC5 connection/communication is possible with the anchor UEs, and thus there is no major problem when the target UE is in charge of position calculation. However, when the target UE does not have position calculation capability, a possible anchor UE may take charge of position calculation (same as LMF in conventional network-based positioning).

In this case, when the anchor UE functions as a server UE, a method for stable sidelink positioning operation is required.

The server UE selection method according to the present disclosure proposes a method of selecting a server UE from among a plurality of anchor UEs.

### Method 1 - Method of selecting anchor server UE by using target UE's relay

The target UE and the selected anchor UEs are in a state in which PCS connection/communication is possible between the target UE and each anchor UE, and thus each anchor UE transmits the PRS (or SL-PRS) measurement result to the target UE, and the target UE relays this to the anchor UE that serves as a server UE.

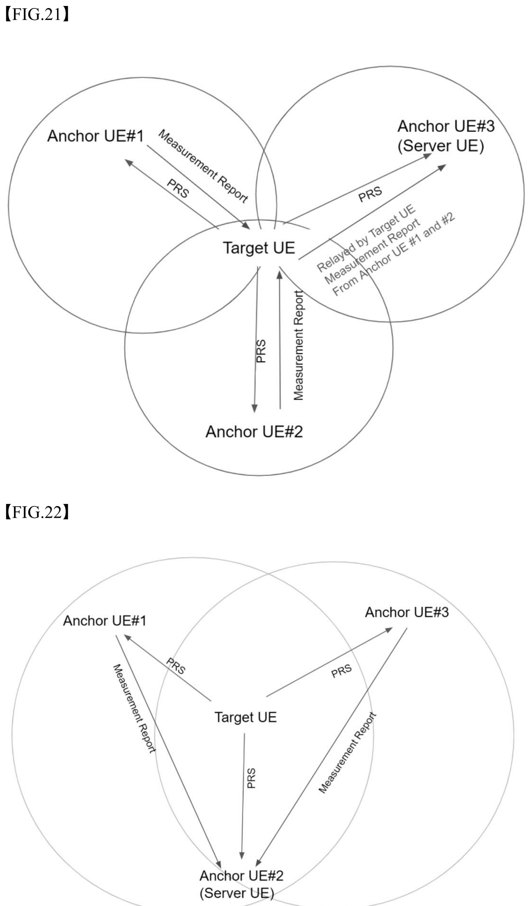

FIG. 21 illustrates an example of selecting a server UE according to the present disclosure.

Referring to FIG. 21, it is assumed that there are a target UE and an anchor UE #1, an anchor UE #2, and an anchor UE #3, and that each of the target UE and the anchor UE #1, the anchor UE #2, and the anchor UE #3 may have a PCS connection, but each of the anchor UE #1, the anchor UE #2, and the anchor UE #3 may not have a PCS connection with each other.

In this case, the function of the server UE is assumed by anchor UE #3. Anchor UEs #1 and #2 transmit measurement results to the target UE, and the target UE relays the received measurement results to anchor UE #3. Based on the measurement results received from each anchor UE, the server UE may calculate the location of the target UE.

### Method 2: Method of selecting anchor server UE with overlapping coverage

When a specific anchor UE may connect to other anchor UEs via PCS similar to the target UE, the anchor UE may be selected as a server UE.

FIG. 22 illustrates an example of selecting a server UE according to the present disclosure.

Referring to FIG. 21, there are a target UE and an anchor UE #1, an anchor UE #2, and an anchor UE #3, and each of the target UE and the anchor UE #1, the anchor UE #2, and the anchor UE #3 may have a PCS connection, and the anchor UE #2 may have PCS communication with the anchor UE #1 and the anchor UE #3. However, it is assumed that anchor UE #1 and anchor UE #3 are incapable of PC5 communication.

In this case, anchor UE#2 may communicate with all other anchor UEs in PCS, and thus there is no coverage problem when functioning as a server UE. During the anchor UE selection process, the target UE informs the anchor UE of the UE that may deliver the SL-PRS measurement report (i.e., the SLPP ProvideLocationInformation message), rather than the server UE. That is, in method 1, the UE to which the SL-PRS measurement report is to be transmitted is notified as the target UE, and in method 2, the UE to which the SL-PRS measurement report is to be transmitted is notified as the anchor UE#2.

When the target UE is capable of performing the function of a server UE, the target UE informs other anchor UEs of its UE ID as the server UE ID. This is an operation of configuring a signaling path between the actual server UE and another anchor UE. Therefore, the actual server UE is selected from among the anchor UEs that are not target UEs and may serve as server UEs.

When the target UE itself is not capable of performing the function of a server UE, each candidate anchor UE is requested to inform the target UE of its discovered UE ID to discover an anchor UE with overlapping coverage. Alternatively, each candidate anchor UE may proactively announce itself without the target UE's request. The target UE selects an anchor UE that may function as a server UE among the UE IDs discovered by each candidate anchor UE as a server UE.

In Method 2, each candidate anchor UE may use the discovery message or an SLPP message to transmit the discovered UE ID to the target UE. The UE ID used in the present disclosure may use the Layer 2-ID used in sidelink communication.

In the present disclosure, the server UE selection process based on location calculation is described. However, the same process applies to functions of other server UEs.

For example, in the case of a method of using an anchor server UE using a relay of a target UE of FIG. 21, the target UE may exchange all messages between the server UE and anchor UEs with the relay. Assistant data may also be transmitted between server UEs and anchor UEs in the same way.

### <Positioning method using server UE>

As described above, the server UE function as a location server such as selecting a positioning scheme, allocating assistant data, and calculating a location. Therefore, the server UE needs to transmit and receive messages/signaling with the anchor UE and the target UE. The target UE requires sidelink communication with the anchor UE at least for SL-PRS transmission/measurement.

Ultimately, the anchor UE needs sidelink communication with the target UE, and also needs sidelink communication with the server UE at the same time. When a third UE (i.e., neither the target UE nor the anchor UE) is used as a server UE, the following problems arise.

Problem 1) Only UEs belonging to an area in which coverage of a target UE and coverage of a server UE overlap may be selected as an anchor UE. In this case, depending on an environment, the target UE may not be able to use some of the UEs capable of SL-PRS transmission/measurement.

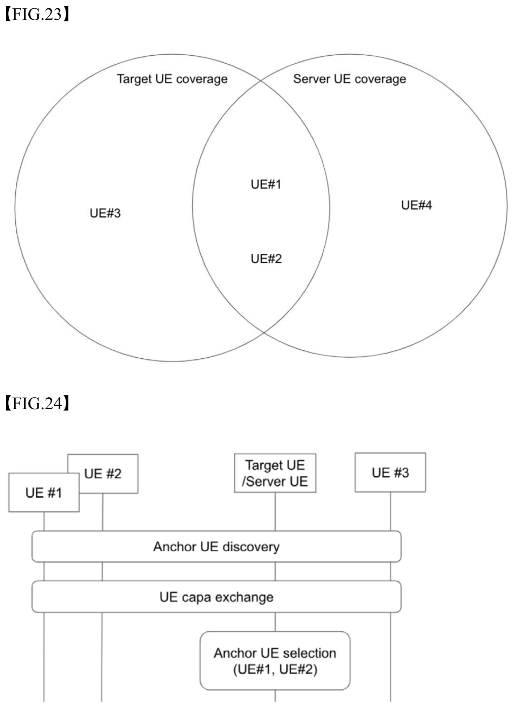

FIG. 23 is a diagram for explaining a problem in server UE selection according to the related art. In FIG. 23, only UE#1 and UE#2 may be used as anchor UEs.

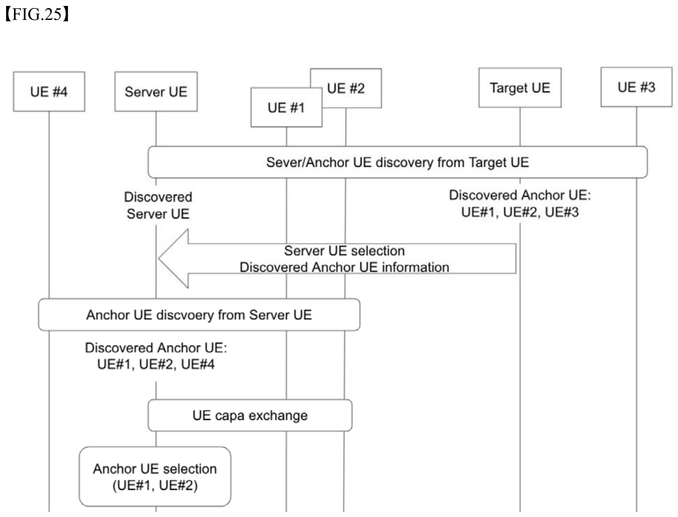

FIGS. 24 and 25 are diagrams illustrating an anchor UE determination process according to the related art.

Problem 2) When the target UE functions as a server UE as in FIG. 24, the anchor UE is determined through an anchor UE search capability exchange process.

However, when a third UE (i.e., neither a target UE nor an anchor UE) is used as a server UE as in FIG. 25, the target UE requires server UE search/determination and anchor UE search, and the server UE also requires an anchor UE search process. Finally, each anchor UE search result information sharing and a final anchor UE selection process are required. This introduces additional and unnecessary signaling and latency compared to the procedure in which the target UE functions as a server UE.

In fact, the anchor UE functioning as a server UE is not much different from the case in which a third UE functions as a server UE. Here, the server UE (which also serves as an anchor UE) simultaneously functions as a server UE and SL-PRS transmission/measurement. Therefore, even if one of the anchor UEs functions as a server UE, the above problem occurs equally.

Therefore, a method is needed to resolve/minimize problems that occur when a UE other than the target UE is used as a server UE and to maximize the use of the server UE.

The present disclosure proposes a method of configuring and operating a sidelink positioning protocol session for utilizing a server UE.

The use of server UEs, as pointed out in the problem, causes unnecessary signaling and latency. There is a problem that not all available anchor UEs may be used. However, the use of a server UE has an advantage of reducing the complexity and processing power of the target UE because the target UE does not have to perform the function of a server UE.

The present disclosure proposes a method for reducing signaling overhead and latency when using a server UE and reducing complexity and processing power of a target UE by separating a positioning protocol session (more specifically, an SLPP session).

### <First embodiment>

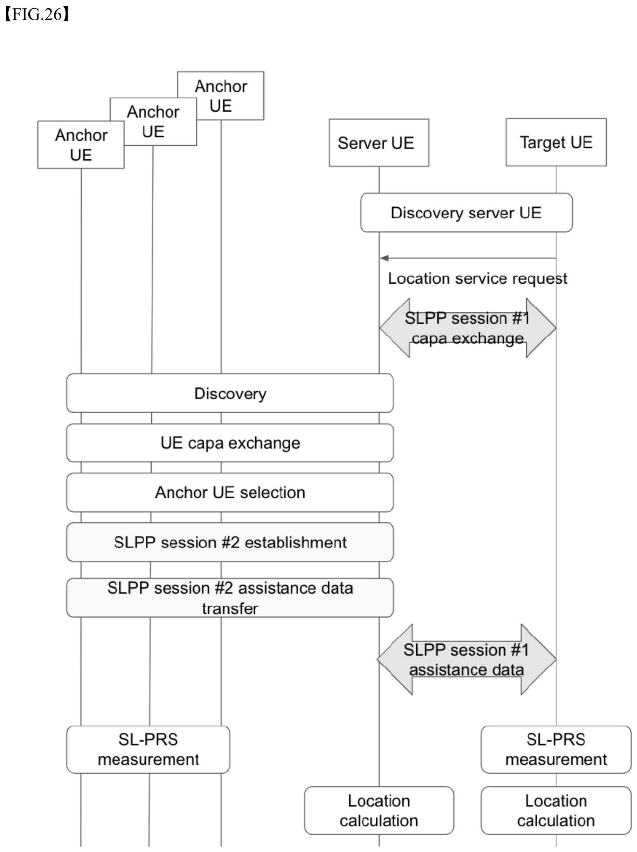

FIG. 26 is a diagram illustrating a server UE-based positioning procedure according to a first embodiment of the present disclosure.

Referring to FIG. 26, a target UE establishes a positioning protocol session (SLPP session #1) with an appropriate server UE through a server UE discovery process, and the server UE establishes another positioning protocol session (SLPP session #2) with the anchor UE(s) selected after the anchor UE discovery/selection process in response to the location service request of target UE.

Then, the server UE determines a positioning method and transmits corresponding assistance data information to the anchor UE and the target UE.

Based on this, the target UE and anchor UE(s) perform PRS (more specifically, SL-PRS) transmission/measurement operations for sidelink positioning, and the server UE or target UE performs position calculation depending on the positioning method.

In this case, there is no need to exchange navigation information between the target UE and the server UE, and the target UE does not perform direct positioning protocol session configuration or message transmission and reception with the anchor UE(s). Accordingly, the target UE may perform simpler positioning protocol session operations by only performing positioning protocol session-related operations with the server UE.

### <Second embodiment>

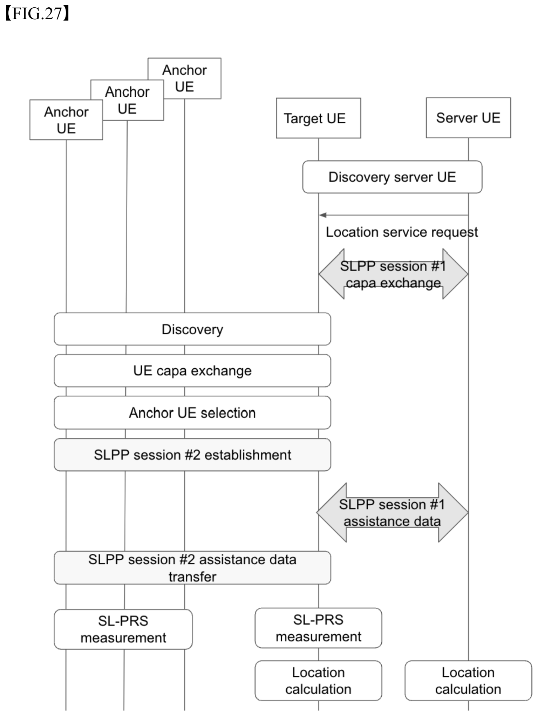

FIG. 27 is a diagram illustrating a server UE-based positioning procedure according to a second embodiment of the present disclosure.

The target UE goes through a server UE search process and establishes a positioning protocol session (SLPP session #1) with an appropriate server UE. The target UE establishes another positioning protocol session (SLPP session #2) with the anchor UE(s) selected after the anchor UE search/selection process that corresponds to the location service request.

The target UE may obtain positioning method determination and corresponding assistance data information from the server UE. The target UE transmits the information to the anchor UE, and based on this, the target UE and anchor UE(s) perform PRS (more specifically, SL-PRS) transmission/measurement operations for sidelink positioning, and depending on the positioning method, the server UE or the target UE performs location calculation.

In this case, there is no need to exchange discovery information between the target UE and the server UE, and the target UE may utilize all available UEs (i.e., those within the target UE coverage) as anchor UEs.

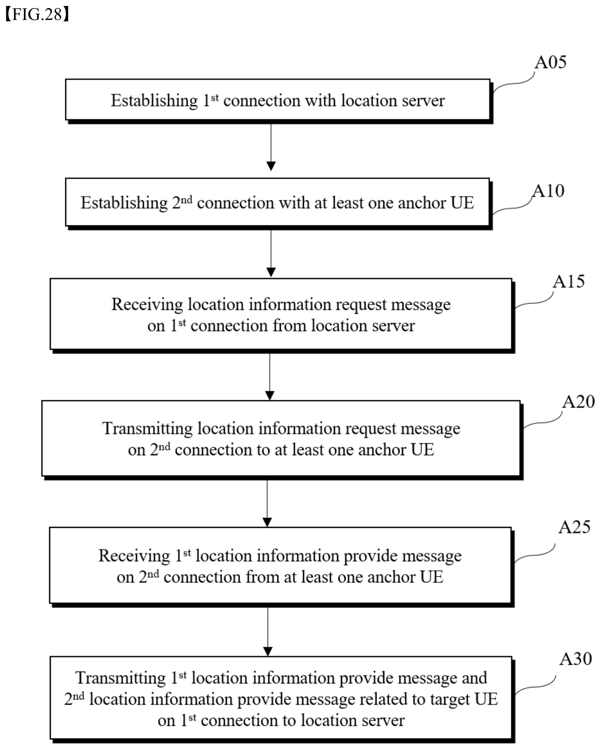

FIG. 28 is a flowchart for performing a server UE-based positioning procedure according to the second embodiment of the present disclosure.

Referring to FIG. 28, a target user equipment (UE) establishes a first connection with a location server including a location management function (LMF) or a server UE (A05). Here, establishing the first connection may include establishing a first positioning protocol session with the location server.

Then, the target UE establishes a second connection with at least one anchor UE (A10). Here, establishing the second connection may include establishing a second positioning protocol session with the at least one anchor UE.

Characteristically, the location server and at least one anchor UE do not establish a connection.

Then, when the target UE receives a location information request message from the location server on the first connection (i.e., via the first positioning protocol session) (A15), the target UE transmits the location information request message to the at least one anchor UE on the second connection (i.e., via the second positioning protocol session) (A20).

When the target UE receives a first location information providing message from at least one anchor UE on the second connection (i.e., via the second positioning protocol session) (A25), the target UE transmits the first location information providing message and a second location information providing message related to the target UE to the location server on the first connection (i.e., via the first positioning protocol session) (A30). In particular, the location server performs location calculation of the target UE based on the second location information providing message.

### <Third embodiment>

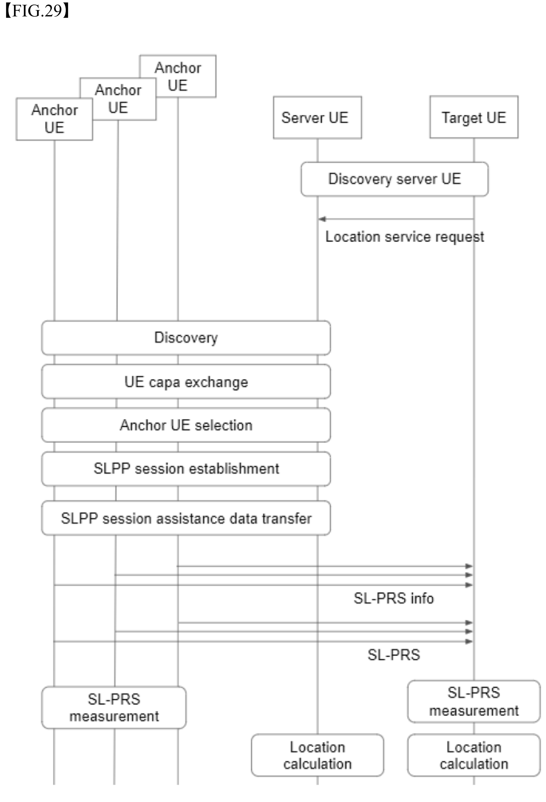

FIG. 29 is a diagram illustrating a server UE-based positioning procedure according to a third embodiment of the present disclosure.

The target UE goes through a server UE search process and transmits location request information to the appropriate server UE. The server UE establishes a positioning protocol session (SLPP session) with the anchor UE(s) selected after the anchor UE search/selection process to meet the location service request of the target UE.

The server UE determines a positioning method and transmits corresponding assistance data information to the anchor UE. Based on this, the anchor UE(s) announce PRS (more specifically SL-PRS) information for sidelink positioning, perform PRS (more specifically SL-PRS) transmission/measurement operations, and the server UE or target UE performs position calculation depending on the positioning method.

In this case, the target UE does not establish a positioning protocol session with the server UE and anchor UE(s). The target UE performs PRS (more specifically, SL-PRS) transmission/measurement based on the PRS (more specifically, SL-PRS) information received from the anchor UE(s). Through this, the target UE may perform sessionless sidelink positioning operations.

Here, the anchor UE(s) may inform the target UE of the PRS (more specifically, SL-PRS) information using a broadcast method. The server UE may inform the target UE of its UE ID information and transmit the information to the corresponding UE ID in a unicast manner.

The present disclosure points out a problem in a method of establishing a session between a target UE, an anchor UE, and a server UE, and to resolve the problem, the present disclosure proposes a method of establishing a positioning protocol session by separating the session. This reduces signaling overhead and latency of the target UE, while simultaneously reducing complexity and processing power.

The embodiments of the present disclosure may be applied in implementing the above-described wireless sensing and radio frequency sensing functions.

Also, while the term sidelink positioning is used for simplicity in the present disclosure, the configuration of the present disclosure may be applied to positioning based on a communication method in which a direct link is established between UEs without the assistance of the BS to exchange voice or data directly.

The above-described embodiments are combinations of the components and features of the present disclosure in specific forms. Each component or feature should be considered optional unless explicitly mentioned otherwise. Each component or feature may be implemented without being combined with other elements or features. Furthermore, some components and/or features may be combined to implement embodiments of the present disclosure. The order of operations described in the embodiments of the present disclosure may be rearranged. Some components or features of one embodiment may be included in another embodiment, or the components or features may be replaced with related components or features of the other embodiment. It is obvious that claims that are not explicitly cited in the appended claims may be combined to form an embodiment or included as a new claim by amendment after filing.

It is evident to those skilled in the art that the present disclosure could be realized in various specific forms within the scope of the features of the present disclosure. Therefore, the detailed description above should not be interpreted restrictively in all respects but should be considered as illustrative. The scope of the present disclosure should be determined by a reasonable interpretation of the appended claims, and all changes within the equivalent scope of the present disclosure are encompassed within the scope of the present disclosure.

### Industrial Applicability

The present disclosure may be used in a terminal, base station, or other equipment of a wireless mobile communication system.

## Claims

1. A method performed by a target user equipment (UE) in a wireless communication system, the method comprising:
establishing a first connection with a location server;
establishing a second connection with at least one anchor UE;
based on receiving a location information request message from the location server on the first connection, transmitting the location information request message to the at least one anchor UE on the second connection; and
based on receiving a first location information providing message from the at least one anchor UE on the second connection, transmitting the first location information providing message and a second location information providing message related to the target UE to the location server on the first connection.

2. The method of claim 1, wherein the location server includes a location management function (LMF) or a server UE.

3. The method of claim 1, wherein the location server performs location calculation of the target UE based on the second location information providing message.

4. The method of claim 1, wherein the location server and the at least one anchor UE do not establish a connection.

5. The method of claim 1, wherein the establishing of the first connection includes establishing a first positioning protocol session with the location server, and
the establishing of the second connection includes establishing a second positioning protocol session with the at least one anchor UE.

6. A target user equipment (UE) in a wireless communication system, the target UE comprising:
at least one transceiver;
at least one processor; and
at least one computer memory operably connectable to the at least one processor and storing instructions that, when executed, cause the at least one processor to perform operations, the operations comprising:
establishing a first connection with a location server;
establishing a second connection with at least one anchor UE;
based on receiving a location information request message from the location server on the first connection, transmitting the location information request message to the at least one anchor UE on the second connection; and
based on receiving a first location information providing message from the at least one anchor UE on the second connection, transmitting the first location information providing message and a second location information providing message related to the target UE to the location server on the first connection.

7. The target UE of claim 6, wherein the location server includes a location management function (LMF) or a server UE.

8. The target UE of claim 6, wherein the location server performs location calculation of the target UE based on the second location information providing message.

9. The target UE of claim 6, wherein the location server and the at least one anchor UE do not establish a connection.

10. The target UE of claim 6, wherein the establishing of the first connection includes establishing a first positioning protocol session with the location server, and
the establishing of the second connection includes establishing a second positioning protocol session with the at least one anchor UE.

11. A processing device in a wireless communication system, the processing device comprising:
at least one processor; and
at least one computer memory operably connected to the at least one processor and storing instructions that, when executed, cause the at least one processor to perform operations for a target user equipment (UE), the operations comprising:
establishing a first connection with a location server;
establishing a second connection with at least one anchor UE;
based on receiving a location information request message from the location server on the first connection, transmitting the location information request message to the at least one anchor UE on the second connection; and
based on receiving a first location information providing message from the at least one anchor UE on the second connection, transmitting the first location information providing message and a second location information providing message related to the target UE to the location server on the first connection.

12. A computer-readable storage medium, the storage medium storing at least one program code including instructions that, when executed, cause at least one processor to perform operations for a target user equipment (UE), the operations comprising:
establishing a first connection with a location server;
establishing a second connection with at least one anchor UE;
based on receiving a location information request message from the location server on the first connection, transmitting the location information request message to the at least one anchor UE on the second connection; and
based on receiving a first location information providing message from the at least one anchor UE on the second connection, transmitting the first location information providing message and a second location information providing message related to the target UE to the location server on the first connection.
